# EUROPÄISCHE PATENTSCHRIFT

(11) **EP 0 793 532 B1**
(45) Veröffentlichungstag und Bekanntmachung des Hinweises auf die Patenterteilung: **15.07.1998**
(21) Anmeldenummer: 95941623.1
(22) Anmeldetag: 23.11.1995
(51) Int. Cl.: B01J 19/12, C08J 3/28, B29C 59/14

(54) **PLASMAANLAGE**
PLASMA FACILITY
INSTALLATION A PLASMA

(30) Priorität: 24.11.1994 DE 4443240
(43) Veröffentlichungstag der Anmeldung: 10.09.1997
(73) Patentinhaber: ARPLAS Gesellschaft für Plasmatechnologie mbH, 06369 Weissandt-Gölzau (DE)
(72) Erfinder: BERGER, Steffen, D-40625 Düsseldorf (DE); MESSELHÄUSER, Johannes, D-72076 Tübingen (DE); SCHÖNHERR, Walter, D-53773 Hennef (DE)
(74) Vertreter: Schneider, Henry
(86) Internationale Anmeldenummer: EP9504619
(87) Internationale Veröffentlichungsnummer: WO9615851

(56) Entgegenhaltungen:
- EP-A- 0 039 517
- EP-A- 0 437 267
- US-A- 5 234 723
- PATENT ABSTRACTS OF JAPAN vol. 10 no. 235 (C-366) ,14.August 1986 & JP,A,61 069804 (HITACHI LTD.) 10.April 1986, & DATABASE WPI Section Ch, Week 8621 Derwent Publications Ltd., London, GB; Class A10, AN 86-133839 & JP,A,61 069 804 (HITACHI K.K.) , 10.April 1986
- PATENT ABSTRACTS OF JAPAN vol. 10 no. 292 (C-376) ,3.Oktober 1986 & JP,A,61 108605 (KANEBO LTD.) 27.Mai 1986, & DATABASE WPI Section Ch, Week 8627 Derwent Publications Ltd., London, GB; Class A10, AN 86-174299 & JP,A,61 108 605 (KANEBO K.K. & KANEBO GOSEN K.K.) , 27.Mai 1986
- PATENT ABSTRACTS OF JAPAN vol. 14 no. 480 (C-0771) ,19.Oktober 1990 & JP,A,02 198626 (TSUKISHIMA KIKAI CO. LTD.) 7.August 1990, & DATABASE WPI Section Ch, Week 9037 Derwent Publications Ltd., London, GB; Class J08, AN 90-280139 & JP,A,02 198 626 (TSUKISHIMA KIKAI K.K. & MITSUI MIIKE MACH. K.K.) , 7.August 1990

## Beschreibung

Die Erfindung betrifft eine Plasmaanlage, insbesondere zum Behandeln alkylgruppenhaltiger Feststoffe mit einem Niedertemperaturplasma, mit einem Behandlungsreaktor und dem Behandlungsreaktor zugeordneten Einrichtungen zum Erzeugen eines Plasmas.

Derartige Plasmaanlagen sind bekannt. So sind Plasmaanlagen unterschiedlicher Bauform bekannt, die einen Behandlungsreaktor und dem Behandlungsreaktor zugeordnete Einrichtungen zum Erzeugen eines Plasmas aufweisen. Der Behandlungsreaktor verfügt über eine geeignete verschließbare Öffnung, durch die in den Behandlungsreaktor die zu behandelnden Objekte eingebracht werden können. So ist beispielsweise aus der DE 41 41 805 A1 eine Vorrichtung zur Herstellung von thermoplastischen Kunststoffteilen mit Hilfe von Niedertemperaturplasmen bekannt, die eine mit einer Vakuumpumpe verbundene Vakuumkammer aufweist. In die Vakuumkammer kann über eine Kammertür ein thermoplastischer Kunststoff in Granulatform zur Niedertemperaturplasmabehandlung eingebracht werden. Darüber hinaus ist bekannt, in derartige Behandlungsreaktoren alkylgruppenhaltige Feststoffe, beispielsweise Polyolefine, in Form von Pulver, Fasern, Folien oder ganzen Formteilen einzubringen, um eine Oberflächenbehandlung mittels des Niedertemperaturplasmas zu erreichen.

Bei allen bekannten Plasmaanlagen ist nachteilig, daß diese nicht geeignet sind, eine durchdringende, langzeitstabile Modifizierung der zu behandelnden alkylgruppenhaltigen Feststoffe sicherzustellen.

Der Erfindung liegt daher die Aufgabe zugrunde, eine Plasmaanlage der gattungsgemäßen Art zu schaffen, die einfach aufgebaut ist und mittels der eine homogene, das heißt über die gesamte Raumausdehnung des zu behandelnden Feststoffes sich erstreckende chemische Modifizierung möglich ist.

Erfindungsgemäß wird die Aufgabe durch eine Plasmaanlage mit den im Anspruch 1 genannten Merkmalen gelöst. Dadurch, daß dem Behandlungsreaktor eine Einrichtung zum Erzeugen einer Schmelze der zu behandelnden Feststoffe zugeordnet ist, ist es in einfacher Weise möglich, die Feststoffe vor und/oder während der Niedertemperatur-Plasmabehandlung in eine Schmelze zu überführen. Es hat sich überraschenderweise gezeigt, daß in eine Schmelze überführte Feststoffe, insbesondere alkylgruppenhaltige Feststoffe, gezielt einer qualitativ und quantitativ hochwertigen chemischen Modifizierung unterzogen werden können. Insbesondere wird eine chemische Modifizierung möglich, die über eine ledigliche Oberflächenbehandlung der alkylgruppenhaltigen Feststoffe weit hinausgeht.

In vorteilhafter Ausgestaltung der Erfindung ist vorgesehen, daß der Behandlungsreaktor und die Einrichtung zur Erzeugung der Schmelze getrennte, miteinander gekoppelte Module der Plasmaanlage bilden. Hierdurch wird es vorteilhaft möglich, jedes der Module auf seinen Bestimmungszweck zu optimieren, so daß insgesamt eine variable, anpassungsfähige Plasmaanlage geschaffen ist.

In weiterer vorteilhafter Ausgestaltung der Erfindung ist vorgesehen, daß der Behandlungsreaktor Mittel zum Bewegen der Schmelze während der Plasmabehandlung aufweist. Hierdurch wird es möglich, eine homogene Durchmischung beziehungsweise homogene Behandlung der in die Schmelze überführten alkylgruppenhaltigen Feststoffe mit dem Niedertemperaturplasma zu erreichen, so daß eine im wesentlichen vollständige, gleichmäßige, chemische Modifizierung erreicht wird.

Weitere vorteilhafte Ausgestaltungen der Erfindung ergeben sich aus den übrigen in den Unteransprüchen genannten Merkmalen.

Die Erfindung wird nachfolgend in einem Ausführungsbeispiel anhand der zugehörigen Zeichnung, die schematisch eine Plasmaanlage zeigt, näher erläutert.

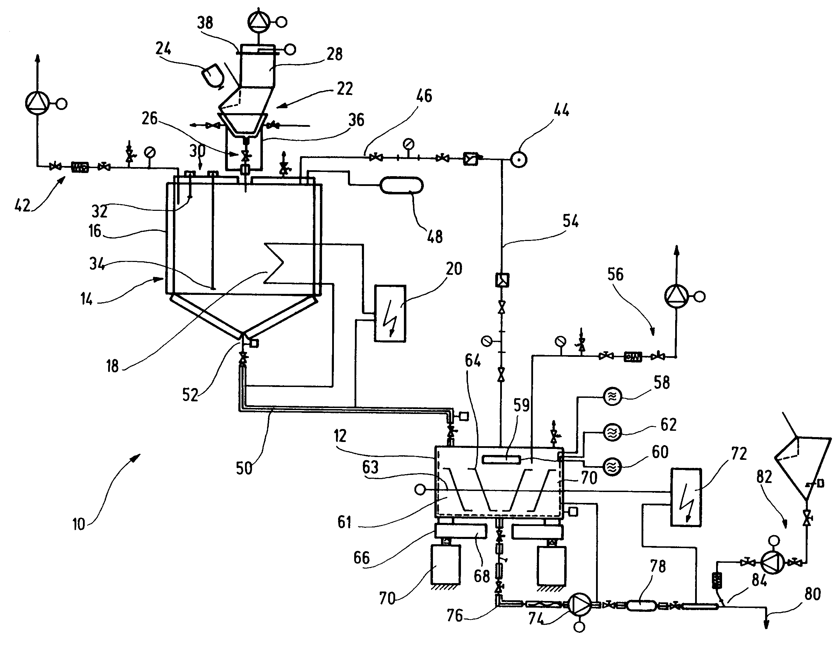

In der Figur ist eine allgemein mit 10 bezeichnete Plasmaanlage dargestellt. Aus Gründen der Übersichtlichkeit wurde auf die Darstellung für die Erfindung nicht wesentlicher Teile, wie beispielsweise mechanische Verbindungen, mechanische Befestigungen, detaillierte Gehäusedarstellungen usw. verzichtet. Darüber hinaus beschränkt sich die erfindungsgemäße Plasmaanlage nicht auf die gewählte räumliche Darstellung. So kann jede andere Zuordnung der einzelnen - nachfolgend noch zu erläuternden Bestandteile der Plasmaanlage - gewählt sein, wenn sie in ihrem Zusammenwirken die gewünschte Behandlung der alkylgruppenhaltigen Feststoffe gewährleisten.

Hauptbestandteile der Plasmaanlage 10 sind ein Behandlungsreaktor 12 und eine Einrichtung 14 zum Erzeugen einer Schmelze. Die Einrichtung 14 besteht im wesentlichen aus einem Behälter 16, dem eine Heizeinrichtung 18 zugeordnet ist. Die Heizeinrichtung 18 können beispielsweise in den Behälter 16 eingreifende, von einem Heizmedium, beispielsweise einem Wärmeträgeröl, durchflossene Leitungen sein. Der Heizeinrichtung 18 ist eine Heiz- und Regeleinrichtung 20 zugeordnet, die eine Temperierung des Heizkreislaufes in Abhängigkeit des jeweiligen Wärmeregimes für den jeweiligen zu behandelnden Feststoff regelt.

Der Behälter 16 besitzt eine Einfüllanordnung 22, mittels der eine Beschickung des Behälters 16 mit hier lediglich angedeuteten, alkylgruppenhaltigen Feststoffen 24 erfolgen kann. Der Einfüllanordnung 22 ist eine Dosiereinrichtung 26 und eine Entstaubungseinrichtung 28 zugeordnet. Die Dosiereinrichtung 26 gestattet ein definiertes Aufgeben, beispielsweise einer bestimmten Masse oder eines bestimmten Volumens pro Zeiteinheit des Feststoffes 24 in den Behälter 16. Der Behälter 16 verfügt über eine Füllstandsanzeige 30, die beispielsweise eine erste Füllstandssonde 32 für einen maximalen Füllstand und eine zweite Füllstandssonde 34 für einen minimalen Füllstand aufweist. Zwischen dem Behälter 16 und der Einfüllanordnung 22 kann eine Kühleinrichtung 36 angeordnet sein, die ein Erwärmen des Feststoffes 24 bereits in der Einfüllanordnung 22 durch in dem Behälter 16 entstehende Wärme verhindert. Hierzu können von einem Kühlmittel durchflossene, nicht näher bezeichnete, Leitungen und Behälter vorgesehen sein. Die Entstaubungseinrichtung 28 besitzt einen Filter 38 sowie einen Ventilator 40.

Der Behälter 16 ist mit einer Evakuierungseinrichtung 42 versehen, über die ein Vakuum in dem Behälter 16 erzeugbar ist.

Der Plasmaanlage 10 ist ferner eine hier lediglich angedeutete Quelle 44 für wenigstens ein Inertgas und/oder wenigstens ein Reaktionsgas zugeordnet. Die Quelle 44 ist über eine erste Zuführung 46 mit dem Behälter 16 verbunden. Ferner ist ein Gasanalysegerät 48 vorgesehen, das mit dem Behälter 16 gekoppelt ist.

Der Behandlungsbehälter 12 ist mit dem Behälter 16 über eine Verbindungsleitung 50 verbunden. Die Verbindungsleitung 50 ist beheizbar, wobei der Heizkreislauf der Verbindungsleitung 50 vorzugsweise mit der Heiz- und Regeleinrichtung 20 verbunden ist, so daß sich ein gemeinsamer Heizkreislauf mit der Heizeinrichtung 18 ergibt.

Nach einem nicht dargestellten Ausführungsbeispiel kann der Behälter 16 mit seiner Auslaßöffnung 52 unmittelbar auf den Behandlungsreaktor 12 aufgesetzt sein, so daß sich die Länge der Verbindungsleitung 50 auf ein Minimum beschränkt.

Eine zweite Zuführung 54 verbindet den Behandlungsreaktor 12 mit der Quelle 44 für die Inert- beziehungsweise Reaktionsgase. Der Behandlungsreaktor 12 ist ebenfalls mit einer Evakuierungseinrichtung 56 zum Erzeugen eines Vakuums in dem Behandlungsreaktor 12 verbunden. Der Behandlungsreaktor 12 ist mit hier angedeuteten Plasma-Generatoren 58, 60 und 62 versehen. Die Generatoren 58 bis 62 sind derart angeordnet, daß über diese in dem Behandlungsreaktor 12 eine Plasmaanregung erfolgen kann. Hierzu ist beispielsweise wenigstens eine in dem Behandlungsreaktor angeordnete Elektrode 59 mit einem Mikrowellengenerator 58, mit einer Hochfrequenzeinspeisung 60 und mit einer weiteren Plasmaanregungsquelle 62 verbunden. Auf die konkrete Ausbildung der Elektroden soll im Rahmen der vorliegenden Beschreibung nicht näher eingegangen werden. Diese können beispielsweise stabförmig, kugelförmig, halbschalenförmig usw. sein. Dem Behandlungsreaktor 12 können weitere Arten von Plasmaquellen zugeordnet sein.

Innerhalb des Behandlungsreaktors 12 ist eine Rühreinrichtung 61 angeordnet. Die Rühreinrichtung 61 besitzt beispielsweise auf einer antreibbaren Welle 63 angeordnete schaufelförmige Mischwerkzeuge 64. Die hier gezeigte Ausbildung der Rühreinrichtung 61 ist lediglich beispielhaft. So ist selbstverständlich jede andere Form einer geeigneten Rühreinrichtung 61 denkbar, mittels der ein Rühren, Mischen usw. möglich ist. Der Aufbau der Rühreinrichtung 61 kann einer Viskosität der Schmelze angepaßt sein. Der Behandlungsreaktor 12 ist mit einer Wägeeinrichtung 66 versehen, die Wägezellen 68 aufweist, die einerseits auf einem Lager 70 aufliegen und andererseits den Behandlungsreaktor 12 tragen.

Dem Behandlungsreaktor 12 ist eine weitere Heizeinrichtung 70 zugeordnet, über die eine Temperierung des Innenraums des Behandlungsreaktors 12 möglich ist. Die Heizeinrichtung 70 ist mit einer Heiz- und Regeleinrichtung 72 verbunden, über die eine definierte Wärmemengenbereitstellung erfolgen kann.

Der Behandlungsreaktor 12 ist mit einer eine Förderpumpe 74 aufweisenden Übergabeleitung 76 verbunden. Sowohl die Förderpumpe 74 als auch die Übergabeleitung 76 sind in den über die Heiz- und Regeleinrichtung 72 gespeisten Heizkreislauf eingebunden. Innerhalb der Übergabeleitung 74 ist ein Analyse- und Kontrollgerät 78, beispielsweise ein sogenannter MFI-Controler, eingebunden. Die Übergabeleitung 76 führt zu einer hier lediglich schematisch angedeuteten Konfektionierungseinrichtung 80. Die Konfektionierungseinrichtung 80 kann beispielsweise ein Extruder, ein Granulator, ein Dispergierapparat, eine Spritzgußmaschine, ein Schockkühler, eine Mischanlage zur Herstellung von Lösungen, Dispersionen, Emulsionen, Compounds und/oder Blends, eine Imprägniervorrichtung, eine Sprüh- oder Spritzvorrichtung und/oder eine Vorrichtung zum Herstellen von Verbunden sein. Vor der Konfektionierungseinrichtung 80 ist eine Zugabeeinrichtung 82 vorgesehen, die an einer Mischstelle 84 in der Übergabeleitung 76 mündet.

Die Verbindungsleitung 50 und/oder die Übergabeleitung 76 können beispielsweise bei der Erzeugung und Behandlung von Polyolefinschmelzen Förder- beziehungsweise Extruderschnecken aufweisen.

Den einzelnen Aggregaten der Plasmaanlage 10 sind nicht näher erläuterte Dosier-, Stell- und Antriebselemente zugeordnet, deren Funktionen allgemein bekannt sind.

Die in der Figur gezeigte Plasmaanlage 10 übt folgende Funktion aus:

In den Behälter 16 der Einrichtung 14 wird über die Einfüllanordnung 22 ein alkylgruppenhaltiger Feststoff 24 eingefüllt. Dies können beispielsweise Polyolefine oder Wachse sein. Gegebenenfalls können innerhalb der Einfüllanordnung 22 unterschiedliche alkylgruppenhaltige Feststoffe miteinander vorgemischt werden. Über die Dosiereinrichtung 26 und/oder die Füllstandsanzeige 30 erfolgt das Einbringen einer wählbaren Menge an Feststoffen 24. Wie der weiteren Erläuterung zu entnehmen sein wird, kann das Nachfüllen mit Feststoffen 24 in den Behälter 16 kontinuierlich erfolgen. Innerhalb des Behälters 16 werden die eingefüllten Feststoffe 24 mittels der Heizeinrichtung 18 über ihren Schmelzpunkt erwärmt, so daß eine Schmelze der Feststoffe 24 entsteht. Während der Erzeugung der Schmelze kann der Behälter 16 über die Evakuierungseinrichtung 42 entgast werden. Die sich in dem Behälter 16 befindliche Schmelze verbleibt somit unter einem Vakuum. Über die Zuführung 46 kann in den Behälter 16 ein Inertgas, beispielsweise Helium und/oder Argon, eingefüllt werden. Der in dem Behälter 16 anliegende Gaszustand wird über das Gasanalysegerät 48 kontrolliert. Nach Erzeugen der Schmelze wird diese über die Verbindungsleitung 50 in den Behandlungsreaktor 12 überführt. Die Verbindungsleitung 50 ist beheizt, so daß ein Erstarren der Schmelze während der Überführung verhindert wird. Der Behandlungsreaktor 12 ist ebenfalls über die Heizeinrichtung 70 beheizbar, so daß auch dort der Zustand der Schmelze beibehalten werden kann. Mittels der Rühreinrichtung 61 erfolgt ein Bewegen beziehungsweise Vermischen der eingefüllten Schmelze.

Über die Evakuierungseinrichtung 56 wird in dem Behandlungsreaktor 12 ein Vakuum erzeugt. Entsprechend der gewünschten Niedertemperatur-Plasmabehandlung der Schmelze wird über die Zuführung 54 eine Beaufschlagung mit einem Inertgas und/oder Reaktionsgas durchgeführt. Entsprechend dem gewählten Ausgangsmaterial kann eine unterschiedliche Abfolge von speziellen Kombinationen der Prozeßgase, das heißt, eine erste Behandlung mit einem Inertgasplasma, vorzugsweise mit Helium und/oder Argon, eine nachfolgende Behandlung mit einem Reaktionsgasplasma, vorzugsweise mit Sauerstoff und/oder Stickstoff, oder auch die Behandlung mit einem Plasma, das aus einem Gemisch der vorgenannten Gase erzeugt wird, festgelegt werden. Über die Plasmageneratoren 58, 60 und 62 erfolgt eine Anregung eines Niedertemperaturplasmas. Entsprechend der gewählten Ausgangsmaterialien und/oder des gewünschten Behandlungseffektes kann hierbei eine Abfolge von unterschiedlichen Plasmaanregungszuständen eingestellt werden. So kann die Behandlung entweder über einen der Plasmageneratoren 60 bis 62, eine nacheinanderfolgende Behandlung über wenigstens zwei der Plasmageneratoren 58, 60 und 62 und/oder eine kombinierte Behandlung mit wechselnd zuschaltenden Plasmageneratoren 58, 60 und 62, wobei beispielsweise auch zwei der Generatoren gleichzeitig zur Plasmaerzeugung beitragen können, erfolgen. Entsprechend der Kopplung der Elektroden 59 mit einem Mikrowellengenerator, einer Hochfrequenzeinspeisung oder einer anderen Plasmaanregungsquelle können in dem Behandlungsreaktor 12 Abfolgen unterschiedlicher Niedertemperaturplasmen erzeugt werden. Entsprechend der gewählten Zuführung des Inertgases, des Reaktionsgases beziehungsweise des Reaktionsgasgemisches über die Zuführung 54 kann eine unterschiedliche Einstellung der Verfahrensparameter in dem Behandlungsreaktor 12 erfolgen. Die Einstellung der Verfahrensparameter richtet sich hierbei nach dem Ausgangsprodukt und der gewünschten Anwendung des Endproduktes sowie einer gewählten Geometrie des Behandlungsreaktors 12. Während der Niedertemperaturplasma-Behandlung kann die Schmelze mittels der Rühreinrichtung 10 ständig oder alternierend in Bewegung gehalten werden, so daß eine homogene chemische Modifizierung mittels der Niedertemperaturplasma-Behandlung der gesamten Schmelze, das heißt über deren gesamte Raumausdehnung, erfolgen kann. Die Behandlung erfolgt somit im wesentlichen gleichmäßig. Über die Wägeeinrichtung 66 kann der Zufluß der Schmelze zu dem Behandlungsreaktor 12 auf eine bestimmte Menge begrenzt werden, so daß eine optimale Behandlung möglich ist.

Nach Abschluß der Behandlung wird die chemisch modifizierte Schmelze über die Übergabeleitung 76 einer Konfektionierungseinrichtung 80 zugeführt. Mittels des Analyse- und Kontrollgerätes 78 kann hierbei fortlaufend das mittels der Behandlung erzielte Ergebnis überwacht werden. Vor Zuführung der behandelten Schmelze zu der Konfektionierungseinrichtung 80 besteht die Möglichkeit, über die Zugabeeinrichtung 82 der behandelten Schmelze Zuschlagstoffe, beispielsweise Farbstoffe, Füllstoffe, Reaktanten usw. beizugeben.

Insgesamt ist es mit der erfindungsgemäßen Plasmaanlage 10 möglich, einen im wesentlichen kontinuierlichen Behandlungsdurchlauf von alkylgruppenhaltigen Feststoffen zu erreichen. Während beispielsweise in dem Behandlungsreaktor 12 eine erste Charge eines zuvor in die Schmelze überführten Feststoffes 24 behandelt wird, kann zeitgleich in der Einrichtung 14 eine zweite Charge eines Feststoffes 24 in die Schmelze überführt werden. Nach Behandlung der ersten Charge und deren Weiterführung an die Konfektionierungseinrichtung 80 kann die jetzt in der Einrichtung 14 erzeugte Schmelze in den Behandlungsreaktor 12 überführt werden, während die Einrichtung 14 mit einer nächsten Charge an Feststoffen 24 beschickt werden kann.

Anhand des in der Figur gezeigten Fließschemas der Plasmaanlage 10 soll der grundsätzliche Aufbau verdeutlicht werden. Für die Erfindung ist der dargestellte Aufbau nicht bindend, sondern dieser stellt lediglich ein mögliches Beispiel dar. So können die modulartig aufgebauten Hauptbestandteile der Plasmaanlage 10, nämlich der Behandlungsreaktor 12 und die Einrichtung 14, insbesondere auch derart miteinander kombiniert sein, daß eine Erzeugung der Schmelze innerhalb des Behandlungsreaktors 12 möglich wird.

## Patentansprüche

1. Plasmaanlage, insbesondere zum Behandeln alkylgruppenhaltiger Feststoffe mit einem Niedertemperaturplasma, mit einem Behandlungsreaktor und dem Behandlungsreaktor zugeordneten Einrichtungen zum Erzeugen eines Plasmas, **dadurch gekennzeichnet**, daß dem Behandlungsreaktor (12) eine Einrichtung (14) zum Erzeugen einer Schmelze der zu behandelnden Feststoffe (24) zugeordnet ist.

2. Plasmaanlage nach Anspruch 1, **dadurch gekennzeichnet**, daß der Behandlungsreaktor (12) und die Einrichtung (14) modulartige Bauelemente der Plasmaanlage (10) sind, die mechanisch und/oder verfahrenstechnisch miteinander gekoppelt sind.

3. Plasmaanlage nach einem der vorhergehenden Ansprüche, **dadurch gekennzeichnet**, daß die Einrichtung (14) einen mittels einer Heizeinrichtung (18) beheizbaren Behälter (16) zum Erzeugen der Schmelze aufweist.

4. Plasmaanlage nach einem der vorhergehenden Ansprüche, **dadurch gekennzeichnet**, daß in dem Behälter (16) über eine Evakuierungseinrichtung (42) ein Vakuum erzeugbar ist.

5. Plasmaanlage nach einem der vorhergehenden Ansprüche, **dadurch gekennzeichnet**, daß der Behälter (16) über wenigstens eine Zuführung (46) mit einer Quelle (44) für wenigstens ein Inertgas und/oder wenigstens ein Reaktionsgas verbunden ist.

6. Plasmaanlage nach einem der vorhergehenden Ansprüche, **dadurch gekennzeichnet**, daß der Behandlungsreaktor (12) wenigstens eine Rühreinrichtung (61) zum Bewegen der Schmelze vor, während und/oder nach der Behandlung aufweist.

7. Plasmaanlage nach einem der vorhergehenden Ansprüche, **dadurch gekennzeichnet**, daß der Behandlungsreaktor (12) über wenigstens eine Heizeinrichtung (70) temperierbar ist.

8. Plasmaanlage nach einem der vorhergehenden Ansprüche, **dadurch gekennzeichnet**, daß dem Behandlungsreaktor (12) wenigstens eine Plasmaquelle (58, 60, 62) zur Anregung eines Plasmas zugeordnet ist.

9. Plasmaanlage nach Anspruch 8, **dadurch gekennzeichnet**, daß die Plasmaquellen (58, 60, 62) ein Mikrowellengenerator, eine Hochfrequenzeinspeisung oder eine andere geeignete Plasmaquelle sind und diese sowohl einzeln, alternierend und/oder in Kombinationen zuschaltbar sind.

10. Plasmaanlage nach einem der vorhergehenden Ansprüche, **dadurch gekennzeichnet**, daß der Behandlungsreaktor (12) über eine Zuführung (54) mit der Quelle (44) verbunden ist.

11. Plasmaanlage nach einem der vorhergehenden Ansprüche, **dadurch gekennzeichnet**, daß der Behandlungsreaktor (12) mit der Einrichtung (14) über eine beheizbare Verbindungsleitung (50) zum Überführen der Schmelze verbunden ist.

12. Plasmaanlage nach einem der vorhergehenden Ansprüche, **dadurch gekennzeichnet**, daß die Einrichtung (14) unmittelbar auf den Behandlungsreaktor (12) aufgesetzt beziehungsweise mit diesem verbunden ist.

13. Plasmaanlage nach einem der vorhergehenden Ansprüche, **dadurch gekennzeichnet**, daß die Einrichtung (14) in den Behandlungsreaktor (12) integriert ist.

14. Plasmaanlage nach einem der vorhergehenden Ansprüche, **dadurch gekennzeichnet**, daß dem Behandlungsreaktor (12) eine vorzugsweise beheizbare Übergabeleitung (76) nachgeordnet ist, über die die behandelte Schmelze einer Konfektioniereinrichtung (80) zuführbar ist.

15. Plasmaanlage nach einem der vorhergehenden Ansprüche, **dadurch gekennzeichnet**, daß die Übergabeleitung (76) eine Mischstelle (84) aufweist, an der über eine Zugabeeinrichtung (82) die behandelte Schmelze mit Zuschlagstoffen versetzbar ist.

## Claims

1. A plasma plant, in particular for treating alkyl-group-containing solids with a low-temperature plasma, having a treatment reactor and having apparatus, associated with the treatment reactor, for producing a plasma, characterised in that an apparatus (14) for producing a melt of the solids (24) to be treated is associated with the treatment reactor (12).

2. A plasma plant in accordance with Claim 1, characterised in that the treatment reactor (12) and the apparatus (14) are module-like structural elements of the plasma plant (10) which are connected to one another mechanically and/or process-wise.

3. A plasma plant in accordance with any one of the preceding Claims, characterised in that the apparatus (14) has a container (16), heatable by a heating apparatus (18), for producing the melt.

4. A plasma plant in accordance with any one of the preceding Claims, characterised in that a vacuum can be generated in the container (16) via an evacuation apparatus (42).

5. A plasma plant in accordance with any one of the preceding Claims, characterised in that the container (16) is connected via at least one feed line (46) to a source (44) for at least one inert gas and/or at least one reaction gas.

6. A plasma plant in accordance with any one of the preceding Claims, characterised in that the treatment reactor (12) has at least one agitating apparatus (61) for moving the melt before, during and/or after treatment.

7. A plasma plant in accordance with any one of the preceding Claims, characterised in that the treatment reactor (12) can be kept at a constant temperature via at least one heating apparatus (70).

8. A plasma plant in accordance with any one of the preceding Claims, characterised in that at least one plasma source (58, 60, 62) for exciting a plasma is associated with the treatment reactor (12).

9. A plasma plant in accordance with Claim 8, characterised in that the plasma sources (58, 60, 62) are a microwave generator, a high-frequency power supply or another suitable plasma source and these can be switched on individually, alternately and/or in combinations.

10. A plasma plant in accordance with any one of the preceding Claims, characterised in that the treatment reactor (12) is connected to the source (44) via a feed line (54).

11. A plasma plant in accordance with any one of the preceding Claims, characterised in that the treatment reactor (12) is connected to the apparatus (14) via a heatable connecting line (50) for transferring the melt.

12. A plasma plant in accordance with any one of the preceding Claims, characterised in that the apparatus (14) is mounted directly on the treatment reactor (12) or is connected thereto.

13. A plasma plant in accordance with any one of the preceding Claims, characterised in that the apparatus (14) is integrated into the treatment reactor (12).

14. A plasma plant in accordance with any one of the preceding Claims, characterised in that a preferably heatable delivery line (76) is arranged downstream of the treatment reactor (12) and the treated melt can be fed to a fabricating apparatus (80) via this delivery line (76).

15. A plasma plant in accordance with any one of the preceding Claims, characterised in that the delivery line (76) has a mixing site (84) at which additives are added to the treated melt via a feed apparatus (82).

## Revendications

1. Installation à plasma, notamment pour traiter au plasma à basse température des matières solides contenant des groupes alkyles, comprenant un réacteur de traitement et des dispositifs associés au réacteur de traitement pour produire un plasma, caractérisée en ce qu'un dispositif (14) pour produire une masse fondue à partir des matières solides à traiter (24) est associé au réacteur de traitement (12).

2. Installation à plasma selon la revendication 1, caractérisée en ce que le réacteur de traitement (12) et le dispositif (14) sont des éléments modulaires de l'installation à plasma (10), qui sont accouplés entre eux de façon mécanique ou selon la technologie du procédé.

3. Installation à plasma selon l'une des revendications précédentes, caractérisée en ce que le dispositif (14) présente un récipient (16) pouvant être chauffé à l'aide d'un dispositif de chauffage (18), qui est destiné à produire la masse fondue.

4. Installation à plasma selon l'une des revendications précédentes, caractérisée en ce qu'un vide peut être créé dans le récipient (16) par le biais d'un dispositif à faire le vide (42).

5. Installation à plasma selon l'une des revendications précédentes, caractérisée en ce que le récipient (16) est raccordé à une source (44) d'au moins un gaz inerte et/ou d'au moins un gaz réactif par l'intermédiaire d'au moins une conduite d'alimentation (46).

6. Installation à plasma selon l'une des revendications précédentes, caractérisée en ce que le réacteur de traitement (12) présente au moins un dispositif de remuage (61) pour remuer la masse fondue avant, pendant et/ou après le traitement.

7. Installation à plasma selon l'une des revendications précédentes, caractérisée en ce que le réacteur de traitement (12) peut être tempéré par le biais d'au moins un dispositif de chauffage (70).

8. Installation à plasma selon l'une des revendications précédentes, caractérisée en ce qu'au moins une source de plasma (58, 60, 62) est associée au réacteur de traitement (12), pour générer un plasma.

9. Installation à plasma selon la revendication 8, caractérisée en ce que les sources de plasma (58, 60, 62) sont un générateur de micro-ondes, une arrivée de hautes fréquences ou une autre source de plasma appropriée, et en ce que ceux-ci peuvent être activés individuellement, en alternance et/ou de façon combinée.

10. Installation à plasma selon l'une des revendications précédentes, caractérisée en ce que le réacteur de traitement (12) est relié à la source (44) par le biais d'une conduite d'alimentation (54).

11. Installation à plasma selon l'une des revendications précédentes, caractérisée en ce que le réacteur de traitement (12) est relié au dispositif (14) par le biais d'une conduite de jonction pouvant être chauffée (50), pour y transférer la masse fondue.

12. Installation à plasma selon l'une des revendications précédentes, caractérisée en ce que le dispositif (14) repose directement sur le réacteur de traitement (12) ou y est relié.

13. Installation à plasma selon l'une des revendications précédentes, caractérisée en ce que le dispositif (14) est intégré au réacteur de traitement (12).

14. Installation à plasma selon l'une des revendications précédentes, caractérisée en ce qu'une conduite de transfert (76) pouvant de préférence être chauffée est raccordée en aval du réacteur de traitement (12), qui permet d'acheminer la masse fondue traitée dans un dispositif de confection (80).

15. Installation à plasma selon l'une des revendications précédentes, caractérisée en ce que la conduite de transfert (76) présente un point de mélange (84) au niveau duquel des adjuvants peuvent être incorporés à la masse fondue traitée, par l'intermédiaire d'un dispositif d'alimentation (82).
